Europäisches Patentamt

European Patent Office

Office européen des brevets

(11) Publication number: **0 476 586 A2**

## EUROPEAN PATENT APPLICATION

(21) Application number: **91115752.7**

(22) Date of filing: **17.09.91**

(51) Int. Cl.5: **C08J 9/12**, //(C08L67/02,77:00)

(30) Priority: **17.09.90 JP 246726/90**

(43) Date of publication of application:
**25.03.92 Bulletin 92/13**

(84) Designated Contracting States:
**DE FR GB IT**

(71) Applicant: **THE FURUKAWA ELECTRIC CO., LTD.**
**6-1, 2-chome, Marunouchi Chiyoda-ku**
**Tokyo(JP)**

(72) Inventor: **Kabumoto, Akira, The Furukawa Electric Co., Ltd.**
**6-1, 2-chome, Marunouchi Chiyoda-ku, Tokyo(JP)**
Inventor: **Ito, Masayasu, The Furukawa Electric Co., Ltd.**
**6-1, 2-chome, Marunouchi Chiyoda-ku, Tokyo(JP)**
Inventor: **Nakayama, Kiyoshi, The Furukawa Electric Co., Ltd**
**6-1, 2-chome, Marunouchi Chiyoda-ku, Tokyo(JP)**
Inventor: **Ono Satoshi, The Furukawa Electric Co., Ltd**
**6-1, 2-chome, Marunouchi Chiyoda-ku, Tokyo(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

(54) **A method for producing foamed plastics.**

(57) Foamed plastics are produced by allowing a thermoplastic resin to contain a non-reactive gas under an elevated pressure and then by heating the resultant resin under a non-elevated pressure at a temperature range where a half-crystallization time of said resin is not more than 5 minutes, to carry out foaming, followed by cooling.

The present invention relates to a method for producing foamed plastics suitable for materials of heat preserver, heat insulator, etc.

Conventionally foamed plastics made of such as polyethylene, polystyrene, polypropylene, have been widely employed as building materials or packaging materials because of their excellent properties such as flexibility, lightness and heat insulation. These materials, however, have been confronting with drawbacks of poor mechanical strength, inferior elastic recovery and insufficient heat resistance. Foams of polyester, which has superior mechanical properties in bulk than resins mentioned above, have also been industrially available but their mechanical properties hardly meet the requirements.

The foam materials mentioned above, are mostly produced in such a way that a blowing agent is mixed with a resin and at the time of forming or after preformed, the resultant is heated to conduct foaming.

Thus produced foam materials contain excessively large cells non-homogenously so that they can seldom satisfy the mechanical requirements.

As producing methods of foam materials other than the above, the following methods are commonly known. For example, resin pellets are allowed to contain an inert gas under a high pressure and are fed to an extruder to conduct melt-kneading and thereafter the resultant melt is extruded out into atmosphere to produce a foam material (refer to Examined Japanese Patent Publication Nos. 53-28189 and 54-23386). Another method is that an inert gas is supplied to a molten resin in a barrel of an extruder and the melt is subjected to kneading sufficiently and thereafter the resultant melt is extruded out into atmosphere to produce a foam material.

In the above methods, however, foam materials are produced by allowing molten resin to be quickly extruded out into atmosphere so that the growth rate of the cells within the resin becomes large. Therefore, foam materials with very small cells will not be obtained.

Further, methods for producing foam materials are disclosed in USP 4,473,665. One method comprises steps of: saturating a preformed polymeric material at an elevated pressure with a non-reactive gas such as argon, nitrogen or carbon dioxide; heating the material to its glass transition temperature; reducing the pressure to a state where the material is supersaturated with gas and a very large number of cells are nucleated; and rapidly dropping the temperature of the material to prevent cell growth.

Other method comprises steps of: saturating a preformed polymeric material at an elevated pressure with a non-reactive gas; reducing the pressure to a state of supersaturation with gas to nucleate a very number of cells same as the above method; heating the material to its glass transition temperature to grow cells; and rapidly dropping the temperature of the material.

Another method comprises steps of: saturating a polymeric material at an elevated pressure with a non-reactive gas; heating the material to a molten state and shaping the material at an elevated pressure sufficiently high to prevent cell nucleation within the material; reducing the temperature and pressure to a state where the material is supersaturated with gas to nucleate cells; heating the material to grow cells; and rapidly dropping the temperature of the material to prevent cell growth.

Foam materials thus produced contain very small cells numerously but they have been encountering troubles that usages in higher temperatures are likely to cause deformation or shrinkage. The reason for this may be as follows. That is, in the above methods growth of nucleated cells is performed in the vicinity of a glass transition temperature so that the crystallization in the resultant foam materials does not reach maturity. Consequently when such foam materials are exposed in an atmosphere of elevated temperatures deformation and shrinkage of the materials are likely to occur due to the progress of crystallization.

As has been described above, it is difficult at present to produce foamed plastics having a micro-cell structure and being less susceptible to deformation or shrinkage even when used in high temperatures.

The object of the present invention is to provide a method for producing foamed plastics which have numerous microcells and are less susceptible to deformation or shrinkage in an atmosphere of elevated temperature.

The method for producing foamed plastics of the present invention comprises steps of: allowing a thermoplastic resin to contain a non-reactive gas under an elevated pressure (referred to as "the first step", hereinafter); heating the resultant thermoplastic resin under a non-elevated pressure at a temperature ranging from the crystallization temperature to the melting point of the resin, both of which temperatures are determined by means of a differential scanning calorimeter, to carry out foaming (referred to as "the second step", hereinafter); and cooling thus produced thermoplastic resin (referred to as "the third step" hereinafter).

In the present invention it is recommended that the foaming treatment in the second step is carried out at a temperature range where a half-crystallization time of the thermoplastic resin is not longer than 5 minutes.

Foamed plastics having numerous microcells can be produced by the method of the present invention,

2

and they are hardly deformed by heat with a little shrinkage even when left in an atmosphere of elevated temperatures for a long time.

This invention can be more fully understood from the following detailed description when taken in conjunction with the accompanying drawings, in which:

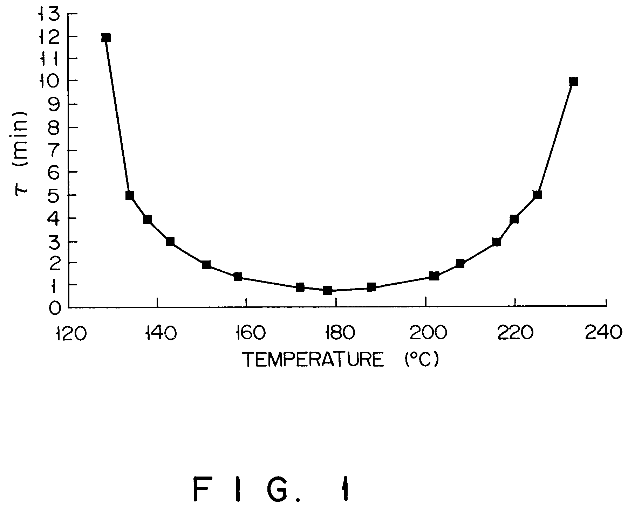

Fig. 1 shows a relationship between temperature and a half-crystallization time ($\tau$) in case of poly (ethylene terephthalate).

The present invention will be described in detail in connection with each step.

The first step is to allow a thermoplastic resin to contain a non-reactive gas under an elevated pressure. "To contain" means a similar state to that a non-reactive gas is dissolving into a liquid.

The process will be carried out, for instance, by placing a preformed thermoplastic resin in an autoclave which is pressurized by a non-reactive gas. Alternatively, extruded thermoplastic resin may be fed sequentially into an autoclave which is pressurized by a non-reactive gas.

The pressure may not be restricted particularly, however, a pressure range of from 30 to 70 kg/cm$^2$ at an ambient temperature is preferable in order to increase the content of the non-reactive gas in the thermoplastic resin.

Examples of thermoplastic resins are polyesters such as poly (ethylene terephthalate) and poly (butylene terephthalate), and polyamides such as nylon 6 and nylon 66.

To produce foam materials containing microcells, the thermoplastic resin is recommended to have a crystallinity of 5% or more and those of 10% or more are the most preferable. Note that a crystallinity of a resin can be determined by various methods such as density method (ASTM D1505-85), differential scanning calorimetry, infrared spectrum analysis and X-ray diffraction method. A nucleating agent or a crystallization accelerator may be added to the resin for purpose of enhancing crystallinity or crystallization rate of the resin. Examples of nucleating agents or crystallization accelerators are inorganic compounds such as talc, mica, kaolin, silica; metal salts of carboxylated organic compounds or high molecular compounds; modified polyolefins with modifiers; modified polyolefin-type elastomers with modifiers; and ester-type plasticizers. Further various kinds of additives such as antioxidants, antistatic agents, UV inhibitors, pigments, dyestuffs and lubricants may be added to thermoplastic resin within the scope not impairing the object of the present invention.

Examples of non-reactive gases are inert gas such as argon, nitrogen and carbon dioxide; oxygen and air; and a mixture gas thereof, among which carbon dioxide is preferable because of being much soluble in thermoplastic resins.

The second step is to heat the thermoplastic resin containing a non-reactive gas under a non-elevated pressure to perform foaming. In this step the resin is exposed to an atmosphere of non-elevated pressure, i.e., the pressure is released by, for example, removing the resin from the autoclave. As a result the resin will be supersaturated with the non-reactive gas. Thereafter the resin is immediately heated to carry out foaming. The foaming temperature at this time is set within the range of from the crystallization temperature to the melting point, both of which temperatures are determined by a differential scanning calorimeter (DSC). The foaming temperature range is so set as to accelerate the cell growth in the resin and crystallization of the resin simultaneously.

A temperature outside the above range will result in an insufficient crystallization of the resin so that microcells, each of which is independently existing in the resin, will not be generated. Consequently in the foam materials, when used in high temperatures, the crystallization progresses to cause deformation or shrinkage. Especially when the foaming is conducted beyond the melting point the cell number will be drastically decreased with an excessively large cell diameter, resulting in deformation even during the foaming process.

Meanwhile both the crystallization temperature and the melting point may largely depend on measurement conditions with a differential scanning calorimeter, particularly on a rate of heating so that only relative values can be obtained. For this reason precise conditions for producing foam materials having improved properties will not be suitably established only on the basis of the temperature range as defined above.

Therefore it is recommended to carry out the foaming process by heating within a temperature range where half-crystallization time of the thermoplastic resin is 5 minutes or less. Half-crystallization time ($\tau$) means a time required for attaining half of the ultimate crystallinity when the thermoplastic resin is crystallized, and is commonly referred to as a value expressing crystallization rate.

Half-crystallization time ($\tau$) will be determined in the following way. A thermoplastic resin to be measured is retained in an atmosphere of certain temperature (e.g., 200°C). At certain intervals crystallinity of the thermoplastic resin is measured and a relationship between the crystallinity and the time elapsed is plotted, from which the time required for attaining half of the ultimate crystallinity will be known.

Operations of determining half-crystallization time must be repeated at various temperatures and

3

relations between the temperature and the required time is plotted, from which a temperature range where the half-crystallization time is 5 minutes or less will be determined.

Details concerning these operations are described in "Polyester Fiber" originally written by H. Ludewing, translated by R. Yokouchi and I. Nakamura, p. 101, 1967 (Corona Publishing Co.) or by "Handbook of Saturated Polyester Resin" edited by Kazuo YUKI, p. 219, 1989 (Nikkan Industrial Newspaper Co.).

When the thermoplastic resin containing a gas is heated at a temperature range where half-crystallization time ($\tau$) of the resin is 5 minutes or less, crystallization of the resin will progress faster than cell growth due to the rapid crystallization rate, whereby rigidity of the resin increases with the crystallization to inhibit the growth of gigantic cells and thus foam materials containing microcells can be produced.

With a foaming temperature outside the range as defined above, the desirable foam materials containing microcells can not be obtained. Namely, with higher temperatures not only the rigidity of the resin is lowered but also the crystallization does not progress so that the growth of cells can not be prevented leading to excessively large cells. Also, with lower temperatures crystallization seldom progresses. Further, when the rigidity of the resin is originally very high it may happen occasionally that cells can hardly grow so that an expansion ratio can not get large enough.

Heating time will be set appropriately taking the heat capacity of the thermoplastic resin as well as the non-reactive gas amount to be contained therein into consideration.

The third step is a cooling step after the completion of heating and foaming. Cooling may be done in this step by well-known methods such as immersion into cold water.

Therebelow the present invention will be described referring to Examples.

Examples 1 - 7 and Comparative Examples 1 - 2

As thermoplastic resins poly (ethylene terephthalate)-A (manufactured by Unitika Ltd., trade name : MA-2103-4), poly (ethylene terephthalate)-B (manufactured by Unitika Ltd., trade name: MA-2103-2), poly (ethylene terephthalate)-C (manufactured by Unitika Ltd., trade name: MA-2103-3), poly (butylene terephthalate) (manufactured by Toray Industries Ltd., trade name: 1401-X04), nylon 6 (manufactured by Toray Industries Ltd., trade name: CM-1046), and nylon 66 (manufactured by Asahi Chemical Ind. Co., Ltd, trade name: Leona) were employed in Examples. Properties of these thermoplastic resins are shown in Tables 1 and 2. Also the relationship between temperature and half-crystallization time of poly (ethylene terephthalate)-A is shown in Fig. 1.

Each thermoplastic resin was extruded into a sheet of 1 mm thick. Each sheet was retained in an autoclave under a pressure of 60 kg/cm$^2$ for 12 hours to contain carbon dioxide. Then the resultant sheet was removed from the autoclave and was immediately immersed into polyalkyleneglycol, which was serving as a heat medium, thereby heating to perform foaming at a temperature listed in Tables 1 and 2. After the completion of foaming each sheet was cooled by immersion into water to produce a foam material in a sheet shape.

Thus produced sheets were respectively measured in their density, expansion ratio and average cell diameter. The expansion ratio was calculated by dividing the density of the foam material by that of the non-foamed material. Average cell diameter was measured in such a manner that: first a sectional area of the foam material was photographed with a scanning electron microscope and the number of cells existing in a given area was counted, based which number the cell number per unit volume was calculated. From thus obtained value and the expansion ratio, the average cell diameter was calculated.

Each foam material was left in a thermostat kept at 150°C for 22 hours and then deformation was observed by naked eyes and further shrinkage ratio was measured. Thermal shrinkage ratio was calculated by comparing the volume of the foam material of post-treatment to that of pre-treatment.

The results are shown in Tables 1 and 2 respectively.

From the Tables it will be clearly understood that foamed plastics produced by the present invention are free from deformation with little shrinkage even when left in an atmosphere of the high temperatures of 150°C for a long time.

4

Table 1

| | Example 1 | Example 2 | Example 3 | Example 4 | Example 5 |
|---|---|---|---|---|---|
| Thermoplastic resin | PET-A | PET-B | PET-B | PET-C | Nylon 6 |
| Crystallinity (%) | 15 | 4 | 4 | 7 | 15 |
| Density of non-foamed Material (g/cm$^3$) | 1.36 | 1.32 | 1.32 | 1.34 | 1.14 |
| Glass transition temperature (°C) | 71 | 67 | 67 | 69 | 70 |
| Crystallization temperature by DSC (°C) | 133 | 138 | 138 | 135 | 70 |
| Melting point by DSC (°C) | 252 | 251 | 251 | 252 | 220 |
| Temperature range of half-crystallization time of 5 min or less (°C) | 135 \| 230 | 145 \| 225 | 145 \| 225 | 140 \| 230 | 135 \| 200 |

(Continued)

EP 0 476 586 A2

Table 1

| | Example 1 | Example 2 | Example 3 | Example 4 | Example 5 |
|---|---|---|---|---|---|
| Foaming temperature (°C) | 170 | 170 | 220 | 170 | 180 |
| Average cell diameter (μm) | 12 | 12 | 15 | 8 | 15 |
| Density of foam material (g/cm³) | 0.41 | 0.28 | 0.29 | 0.33 | 0.28 |
| Expansion ratio | 3.3 | 4.8 | 4.5 | 3.5 | 4.1 |
| Thermostat temperature (°C) | 150 | 150 | 150 | 150 | 150 |
| Deformation | none | none | none | none | none |
| Thermal shrinkage ratio (%) Length | 0.6 | 0.6 | 0.5 | 0.3 | 0.5 |
| Width | 0.5 | 0.5 | 0.5 | 0.2 | 0.5 |
| Height | 0.5 | 0.5 | 0.4 | 0.2 | 0.5 |

Table 2

| | Example 6 | Example 7 | Comparative Example 1 | Comparative Example 2 |
|---|---|---|---|---|
| Thermoplastic resin | PBT | Nylon 66 | PET-C | PET-C |
| Crystallinity (%) | 20 | 19 | 7 | 7 |
| Density of non-foamed Material (g/cm$^3$) | 1.31 | 1.13 | 1.34 | 1.34 |
| Glass transition temperature (°C) | 50 | 79 | 69 | 69 |
| Crystallization temperature by DSC (°C) | 100 | 65 | 135 | 135 |
| Melting point by DSC (°C) | 224 | 260 | 252 | 252 |
| Temperature range of half-crystallization time of 5 min or less (°C) | 140<br>\|<br>210 | 150<br>\|<br>230 | 140<br>\|<br>230 | 140<br>\|<br>230 |

(Continued)

EP 0 476 586 A2

Table 2

| | Example 6 | Example 7 | Comparative Example 1 | Comparative Example 2 |
|---|---|---|---|---|
| Foaming temperature (°C) | 170 | 220 | 110 | 270 |
| Average cell diameter (μm) | 16 | 18 | 12 | 200 |
| Density of foam material (g/cm$^3$) | 0.33 | 0.31 | 0.38 | 0.16 |
| Expansion ratio | 4.0 | 3.6 | 3.5 | 8.5 |
| Thermostat temperature (°C) | 150 | 150 | 150 | 150 |
| Deformation | none | none | a little | remarkably large |
| Thermal shrinkage ratio (%) Length | 0.6 | 0.1 | 2.6 | 0.3 |
| Width | 0.5 | 0.2 | 3.3 | 0.3 |
| Height | 0.4 | 0.2 | 3.5 | 0.3 |

Examples 8 and 9

Using PET-C as a thermoplastic resin and nitrogen or argon as a non-reactive gas instead of carbon dioxide, foam materials were prepared in the same manner as in the above Examples.

The resultant foam materials were respectively measured in their density, expansion ratio and average cell diameter. After each foam material was allowed to be left in a thermostat kept at 150°C for 22 hours, deformation was observed by naked eyes and a shrinkage ratio was measured. The results are shown in Table 3.

It will be apparent from Table 3 that even when nitrogen or argon is used as a non-reactive gas, the similar effect to that achieved by carbon dioxide can be attained.

8

Table 3

| | | Example 8 | Example 9 |
|---|---|---|---|
| Thermoplastic resin | | PET-C | PET-C |
| Non-reactive gas | | Nitrogen | Argon |
| Average cell diameter ($\mu$m) | | 30 | 35 |
| Density of foam material (g/cm$^3$) | | 0.32 | 0.27 |
| Expansion ratio | | 4.2 | 4.9 |
| Thermostat temperature (°C) | | 150 | 150 |
| Deformation | | none | none |
| Thermal shrinkage ratio (%) | Length | 0.4 | 0.5 |
| | Width | 0.5 | 0.3 |
| | Height | 0.4 | 0.4 |

**Claims**

1. A method for producing foamed plastics characterized by comprising steps of:

   allowing a thermoplastic resin to contain a non-reactive gas under an elevated pressure;

   heating the resultant thermoplastic resin under a non-elevated pressure at a temperature ranging from a crystallization temperature to a melting point of said resin, both of which temperatures are determined by means of a differential scanning calorimeter, to carry out foaming; and

   cooling the resultant thermoplastic resin.

2. A method according to claim 1, characterized in that said heating step is carried out at a temperature range where a half-crystallization time of said resin is not more than 5 minutes.

3. A method according to claim 1, characterized in that said thermoplastic resin is a saturated polyester.

4. A method according to claim 3, characterized in that said saturated polyester is selected from a group consisting of poly (ethylene terephthalate) and poly (butylene terephthalate).

5. A method according to claim 1, characterized in that said thermoplastic resin is a polyamide.

6. A method according to claim 5, characterized in that said polyamide is selected from a group consisting of nylon 6 and nylon 66.

7. A method according to claim 1, characterized in that said elevated pressure at the time of allowing said thermoplastic resin to contain a non-reactive gas, is within a range of from 30 to 70 kg/cm$^2$ at a room temperature.

8. A method according to claim 1, characterized in that said non-reactive gas is selected from a group consisting of carbon dioxide, nitrogen and argon.

9. A method for producing foam materials characterized by comprising steps of:

   allowing a saturated polyester having a crystallinity of not less than 10% which is determined by a density method or by means of a differential scanning calorimeter, to contain carbon dioxide under an elevated pressure ranging from 30 to 70 kg/cm$^2$ at a room temperature;

   heating the resultant polyester under a non-elevated pressure at a temperature ranging from 135 to 230°C to carry out foaming; and

   cooling the resultant polyester.

9

F I G. 1